# EUROPÄISCHE PATENTSCHRIFT

(11) **EP 0 616 310 B1**
(45) Veröffentlichungstag und Bekanntmachung des Hinweises auf die Patenterteilung: **16.12.1998**
(21) Anmeldenummer: 94250066.1
(22) Anmeldetag: 14.03.1994
(51) Int. Cl.: G09B 29/04, B42D 15/00

(54) **Rechteckiger Faltbogen mit Diagonalfalzen für grossflächige Abbildungen**
Rectangular foldable sheet with diagonal folding lines for large area images
Feuille pliable rectangulaire avec lignes de pliage diagonales pour dessins à grande surface

(30) Priorität: 16.03.1993 DE 4308308
(43) Veröffentlichungstag der Anmeldung: 21.09.1994
(73) Patentinhaber: Schumacher, Frank, D-10589 Berlin (DE)
(72) Erfinder: Schumacher, Frank, D-10589 Berlin (DE)

(56) Entgegenhaltungen:
- DE-A- 3 208 120
- DE-C- 856 964
- DE-U- 9 303 061
- DK-A- 64 650
- FR-A- 2 628 361
- US-A- 2 333 569
- US-A- 4 502 711

## Beschreibung

Die Erfindung bezieht sich auf ein Faltsystem, mit dessen Hilfe den Benutzern von großflächigen Landkarten und Stadtplänen und von ähnlich großflächigen Abbildungen eine verbesserte Handhabung ermöglicht wird. Kern der Erfindung ist die Verwendung von Diagonalfalzen an den Ecken eines rechteckigen Bogens.

Der Stand der Technik ist gekennzeichnet durch die weite Verbreitung des Falkplansystems sowie der sog. Leporello-Faltung für großflächige Stadtpläne und Landkarten.

Das Leporello-Prinzip ist die einfachste Art einen großformatigen, rechteckigen Bogen auf ein kleineres Format zusammenzufalten. Hierbei wird zunächst entlang der kürzeren Außenseiten mehrfach parallel gefalzt (Zick-Zack-Falz) und dann einmal hälftig senkrecht zu den Parallelfalzen gefalzt. Der Vorteil der Raumersparnis durch diese Falzart steht ein wesentlicher Nachteil gegenüber: Der gefaltete Bogen erlaubt keinen selektiven Zugriff auf einzelne Ansichtsflächen. Diesem Manko begegnet das international bekannte Falk-Plan-Prinzip für Stadtpläne.

Hier wird eine einseitig bedruckte Kartenfläche so gefaltet, daß Ansichtsflächen in einem benutzungsfreundlicheren Format präsentiert werden. Das System zeichnet sich dadurch aus, daß ein Stadtplan über mehrere Seiten verfügt, so daß ein Blättern im Plan _{''}wie in einem Buch" möglich ist und einzelne Teilflächen unabhängig von anderen betrachtet werden können.

Zwei Seiten zusammen bilden hier eine Einheit. Hat man eine Einheit aufgeschlagen, muß man die interessierenden Ansichtsflächen (mit Ausnahme der untersten) erneut aufschlagen, weil die Kartenfläche entlang mehrerer zum oberen und unteren Kartenrand paralleler Falze gefaltet ist. Daraus ergibt sich, daß die Ansichtsflächen einer Einheit in vier Ebenen (z.B. bei der Berlin-, Frankfurt oder München-Ausgabe) übereinanderliegen und erst durch Ausklappen sichtbar gemacht werden müssen.

Vorteile dieses Faltsystems ist vor allem, daß einzelne Ansichtsflächen aus einer großflächigen Karte schnell gefunden und benutzt werden können. Zudem ist sein handliches Format günstig.

Nachteile des Falkplan-Systems sind jedoch auch vorhanden: Erstens ist die sichtbare Teilfläche im Verhältnis zur Gesamtgröße der abgebildeten Kartenfläche sehr klein. Das führt dazu, daß der Benutzer, etwa ein Autofahrer auf der Fahrt vom Südwesten nach Nordosten durch eine Großstadt, sehr häufig neue Teilflächen auseinanderfalten muß, um die geplante Route auf dem Plan während der Fahrt durch die Stadt nachvollziehen zu können.

Zweitens ist das Falk-Plansystem nachteilig für Ortsunkundige, die sich orientieren wollen, um eine Route von Südwest nach Nordost durch eine Ihnen unbekannte Stadt festzulegen. Der Benutzer muß dann den gesamten Plan auseinanderfalten, um den für ihn günstigsten Weg ausmachen zu können. Das ist beim Falkplan sehr umständlich (wie vor allem auch das sich anschließende Wiederzusammenfalten); zudem ist das freihändig unmöglich. Ein einigermaßen befriedigendes Gelingen setzt voraus, daß der Benutzer eine große Unterlage zur Verlügung hat, die der Größe des Plans im auseinandergefalteten Zustand entspricht. Das ist in typischen Benutzungssituationen z.B. bei Autofahrten nicht der Fall.

Die Handhabung ist zudem nachteilig, sobald mehr als eine Ansichtsfläche gleichzeitig betrachtet werden muß, was z.B. beim Nachvollziehen einer zurückgelegten Fahrtstrecke unvermeidlich ist. Es ist unmöglich, einen solchen zweiseitigen Kartenausschnitt mit einer Hand festzuhalten.

Viertens ist von Nachteil, daß die kartographische Nutzfläche des Falkplans gering ist. Seine Rückseite ist in der Regel unbeduckt.

Das der Erfindung zugrundeliegende Problem bestand erstens darin, eine Falttechnik zu entwickeln, die ähnlich wie das Falk-System eine günstige Relation zwischen Benutzungsformat (auseinandergefaltet) und Lagerformat (zusammengefaltet) zu finden.

Zweitens sollte es ein Prinzip sein, daß es dem Benutzer leicht und unkompliziert ermöglicht, Kleinausschnitte des abgebildeten Gegenstandes aufzuschlagen und zu betrachten. Ferner sollte es aber auch leicht sein, einen großen Ausschnitt aufzuschlagen, um den Großteil einer Abbildung im Zusammenhang zu betrachten.

Drittens sollte die Faltung eine sehr gute Handhabbarkeit ermöglichen. Kartenausschnitte sollten mit einer Hand gehalten werden können und es sollte mit Leichtigkeit gelingen, einen gefalteten Bogen schnell auseinanderzufalten und schnell und sicher wieder in den zusammengefalteten Zustand zu überführen.

Der Faltbogen mit Diagonalfalzen verwirklicht diese Anforderungen. Er besitzt den Vorteil einer guten und einfachen Handhabung. Nicht nur ist das Verhältnis zwischen Lagerformat und Benutzungsformat günstig, das über die Transportabilität und damit die Benutzerakzeptanz entscheidet, sondern auch die Leichtigkeit, mit der der Benutzer den Bogen vom Lagerformat ins Benutzungsformat überführen kann.

Ein anderer Vorteil, der insbesondere bei Stadtplänen zum Tragen kommt, ist, daß er spiegelbildlich von der Mitte des Bogens ausgefaltet wird. Die Mitte des Bogens ist bei Stadtplänen oft das Zentrum des Interesses der Benutzer, weil hier die Stadtmitte abgebildet ist. Der Faltbogen hat den Vorteil, daß der Benutzer das Zentrum einer Stadt auf dem Bogen intuitiv finden kann (es liegt in der Mitte; der Plan wird von dort ausgefaltet), also nicht suchen muß (wie bei allen marktgängigen Falzarten), und daß ein Benutzer beim Auffinden des Stadtzentrums den Bogen (im Unterschied zu Leporello-gefalzten Plänen) nicht kompliziert auseinanderfalten muß.

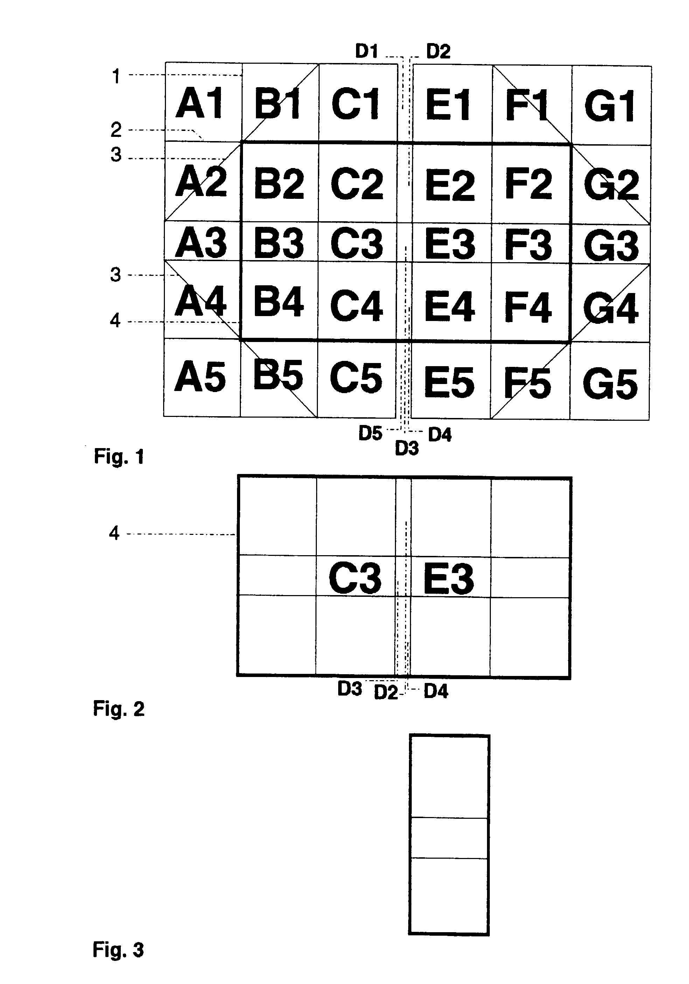

Einen weiteren Vorteil bietet die kartographisch sinnvoll nutzbare Fläche des Bogens. Der Faltbogen eröffnet die Möglichkeit, daß Vorderseite und Rückseite zusammenhängend bedruckt werden, so daß - je nach den Anforderungen durch den abgebildeten Gegenstand - die Darstellungsfläche der Abbildung größer sein kann als die Außenmaße des Bogens in völlig auseinandergefaltetem Zustand. Zum Beispiel ließe sich die Darstellungsfläche der Höhe nach erweitern, indem die Rückseiten der Flächen der Reihe 1 bedruckt werden (Fig. 1: Flächen A1 bis G1). So ist eine nahtlose Fortsetzung der Abbildung, die ohne Rückseitendruck an den Oberkanten der Rechtecke der Reihe 1 enden würde, möglich. Analoges gilt für eine Breitenausdehnung.

Hierdurch ist es im Vergleich mit anderen Falzarten, die nur einen einseitigen Druck erlauben, möglich, mehr als 50 Prozent Papier einzusparen, was eine erhebliche Kostenersparnis bedeuten kann.

Der Faltbogen kann für alle großflächigen Abbildungen verwendet werden, insbesondere für Stadtpläne und Landkarten für alle Zwecke. Daneben ist es auch möglich, eine einzelne oder mehrere Halbseiten zum Einbinden oder Heften in Bücher oder Ordner zu verwenden. Dies könnte z.B. für Atlanten sinnvoll sein, aber auch überall dort, wo für die Darstellung von Abbildungen von großen Gegenständen ein großes Flächenangebot nötig oder vorteilhaft ist.

Einige Ausführungsbeispiele der Erfindung sind in den folgenden Zeichnungen dargestellt. Sie werden im folgenden näher beschrieben.

Die **Folge der Figuren 1 bis 3** zeigt Draufsichten auf den Bogen nach Anspruch 3 (Die Flächen D1 und D5 sind weggeschnitten). Figur 1 zeigt den Bogen in vollständig ausgefaltetem Zustand. Figur 2 zeigt den Bogen nach dem ersten Faltvorgang. Figur 3 zeigt den Bogen vollständig zusammengefaltet. Bei den Figuren 1 bis 3 handelt es sich um Darstellungen im selben Maßstab, so daß das Verhältnis zwischen Benutzungsformat (ausgefaltet) und Lagerformat (zusammengefaltet) optisch sichtbar wird.

**Figur 1** zeigt eine Draufsicht auf den rechteckigen Bogen, der mit Falzlinien versehen ist. Die diagonalen Falzlinien (3) begrenzen an allen vier Ecken des Bogens ein gleichschenkliges, rechtwinkliges Dreieck. Die von den horizontal (2) und vertikal (1) verlaufenden Falzlinien eingeschlossenen Teilflächen sind spaltenweise mit Großbuchstaben bezeichnet und reihenweise arabisch numeriert. Die Teilfläche links oben besitzt die Kennzeichnung A1 und die Teilfläche rechts unten G5. Die Flächen D1 und D5 sind aus dem Bogen ausgeschnitten dargestellt, jedoch könnten sie auch nur bis zur benachbarten Reihe eingeschnitten sein, um ein unabhängiges Auseinanderfalten der rechten und linken Halbseite zu ermöglichen.

Das den Außenrand der Flächen B2 bis F2, B3 bis F3 und B4 bis F4 umschließende Rechteck (4) zeigt dasjenige Außenmaß, daß der Bogen einnimmt, nachdem die außerhalb dieses Rechtecks befindlichen Flächen entlang der Falzlinien nach innen umgeschlagen wurden.

Außer den Teilflächen in Spalte D und denen in Reihe 3 handelt es sich um Quadratflächen von gleicher Größe. Die Flächen in Spalte D besitzen die Funktion, der Halbseite 1 (Spalten A bis C) und der Halbseite 2 (Spalten E bis G) im zusammengelegten Zustand Stauraum zu bieten.

Reihe 3 zeigt eine Möglichkeit, wie die Fläche des Bogens der Höhe nach vergrößert werden kann, ohne daß die Faltbarkeit des Bogens eingeschränkt wird. Das Vorhandensein der Flächen in Reihe 3 berührt das Faltprinzip nicht, d.h. diese Flächen könnten weggelassen werden, ohne daß das Faltprinzip in einer relevanten Weise verändert werden müßte. Die Reihe 3 macht deutlich, daß sich die Gesamtfläche des Bogens umso mehr vergrößern läßt, je länger die kurzen Seiten der Rechtecke der Reihe 3 gewählt werden.

Zur Verdeutlichung der Vergrößerbarkeit des Bogens der Breite nach sind die Spalten C und E eingefügt. Sie vergrößern die Gesamtfläche des Bogens, d.h. auch sie könnten ohne relevante Konsequenzen für das Faltprinzip weggelassen werden. Zwischen Spalten C und D könnten weitere Spalten von gleicher Länge wie C ergänzt werden, um die Kartennutzfläche weiter zu erhöhen. Hierbei wären gleiche Quadrate wie in Spalte C vorteilhaft, jedoch sind auch andere Breiten möglich.

**Figur 2** zeigt eine Draufsicht auf den Bogen der Figur 1 mit nach innen umgeschlagenen Außenflächen (alle Flächen der Spalte A, der Spalte G, der Reihe 1 und der Reihe 5). Außer den Teilflächen C3, E3 und der Reihe D sind keine Vorderseiten der Teilfächen mehr zu sehen, die in der Darstellung der Figur 1 sichtbar waren, sondern nur die Rückseiten dieser Flächen.

**Figur 3** zeigt den Bogen der Figur 1 in ganz zusammengefaltetem Zustand.

**Figur 4** stellt eine perspektivische Zeichnung des Bogens der Figur 1 dar. Sie zeigt, wie die Außenflächen entlang der Falzlinien nach innen umgeschlagen werden.

**Figur 5** zeigt eine perspektivische Darstellung des Bogens der Figur 1. Nur die linke Halbseite des Faltbogens ist sichtbar. Diese Darstellung soll deutlich machen, daß der Bogen auch dann, wenn mehrere Teilflächen ausgefaltet sind, mit einer einzigen Hand ohne Unterstützung gehandhabt werden kann. Die zusammengefaltete rechte Halbseite liegt nach hinten gefaltet hinter den Teilflächen C2, C3 und C4 und dient als Unterstützung für die linke Halbseite, die am rechten Rand einhändig gehalten werden kann.

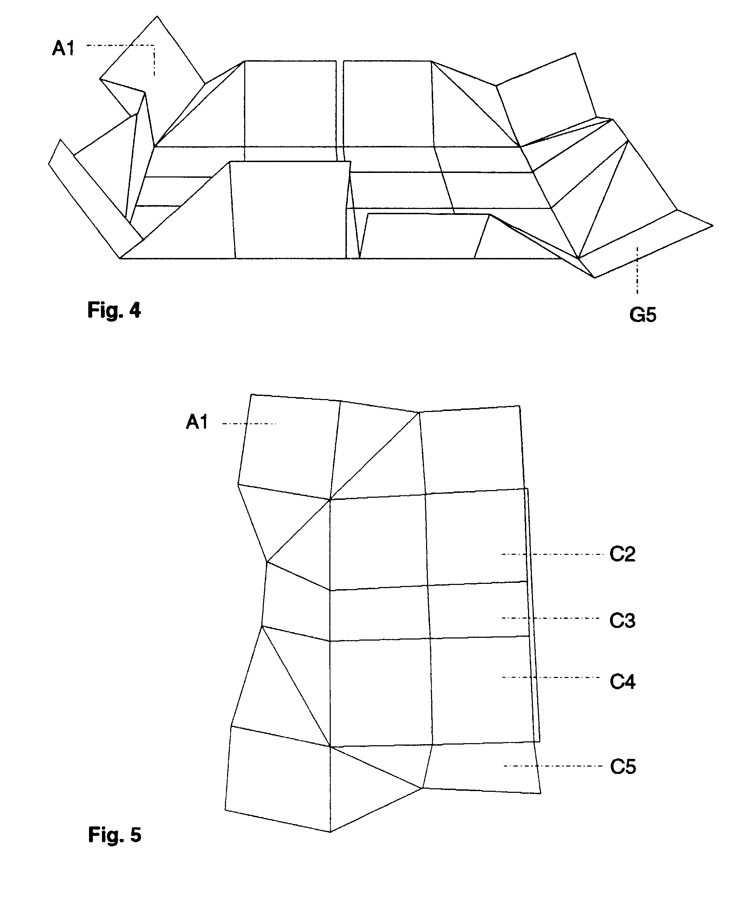

Gleichzeitig verdeutlicht Figur 5 die in Anspruch 4 genannte Möglichkeit, den Bogen nach Anspruch 1 zu halbieren. Dies kann dann sinnvoll sein, wenn eine Halbseite des Bogens in ein Buch oder einen Ordner eingebunden oder eingeheftet werden soll. Die Teilflächen der Spalte D würden in einem solchen Fall als Binde- oder Heftrand benutzt.

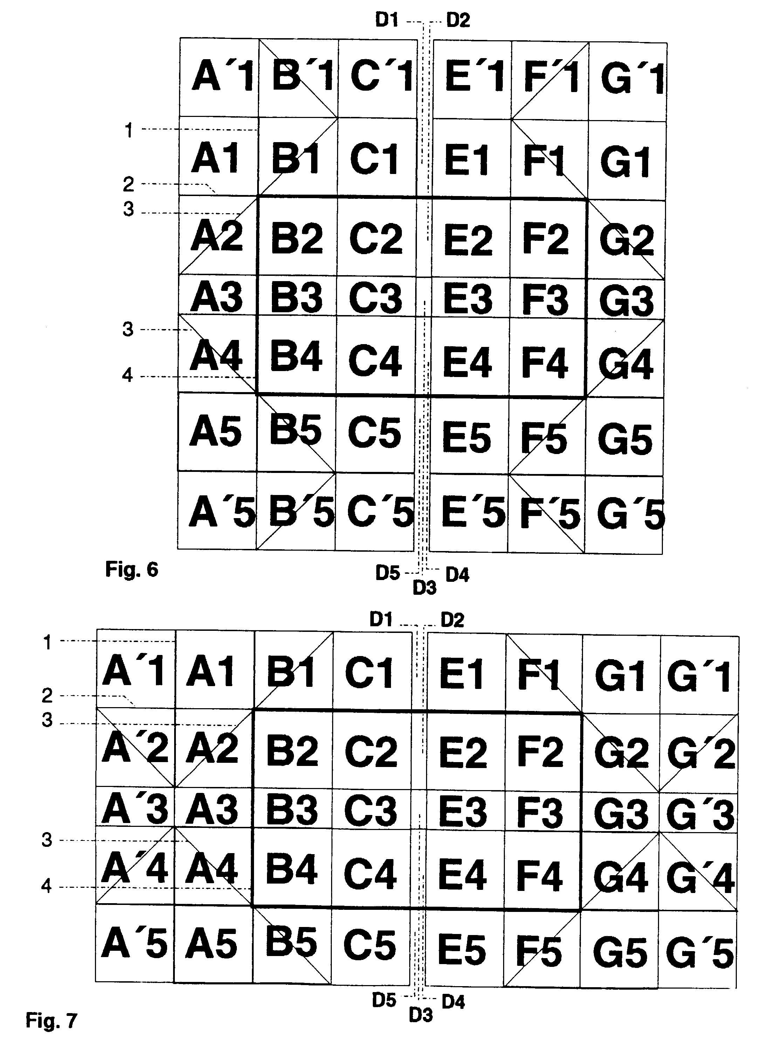

Die **Figuren 6, 7 und 8** zeigen Ausführungsvarianten des zuvor beschriebenen Grundmusters, die sich prinzipiell von dem Grundmuster nur dadurch unterscheiden, daß an den Rändern Zusätzflachen nach Anspruch 2 angebracht worden sind. Damit ergibt sich bei Beibehaltung des Faltprinzips die Möglichkeit, das für eine Abbildung zur Verfügung stehende Nutzformat eines Bogens erheblich zu vergrößern.

**Figur 6** zeigt die Draufsicht einer Variante, die am oberen und unteren Rand des ursprünglichen Bogens Zusatzflächen besitzt. Diese Flächen (oben: A'1 bis G'1; unten: A'5 bis G'5) werden nach hinten umgeschlagen, so daß sich nach dem Umschlagen das Bild der Figur 1 bzw. der Figur 4 ergibt.

**Figur 7** zeigt die Draufsicht einer Variante, die am linken und rechten Rand des ursprünglichen Bogens Zusatzflächen besitzt. Diese Flächen (links: A'1 bis A'5; unten: G'1 bis G'5) werden nach hinten umgeschlagen, so daß sich nach dem Umschlagen das Bild der Figur 1 bzw. der Figur 4 ergibt.

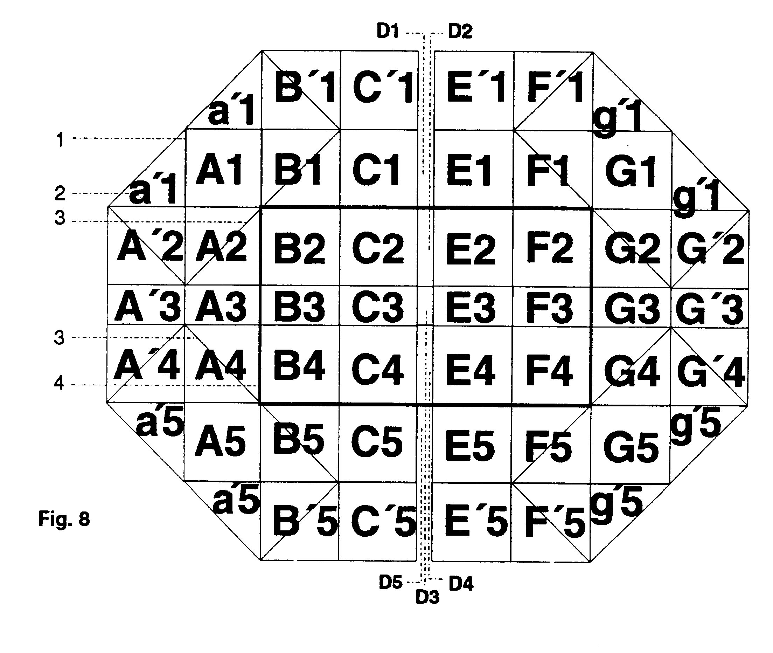

**Figur 8** zeigt die Draufsicht einer Variante, die sowohl am oberen und unteren Rand als auch am linken und rechten Rand des ursprünglichen Bogens Zusatzflächen besitzt. Diese Flächen (oben: a'1, B'1 bis F'1, g'1; unten: a'5', B'5 bis F'5, g'5; links: a'1, A'2 bis A'4, a'5; rechts: g'1, G'2 bis G'4, g'5) werden nach hinten umgeschlagen, so daß sich nach dem Umschlagen das Bild der Figur 1 bzw. der Figur 4 ergibt.

## Patentansprüche

1. **Rechteckiger Faltbogen** für großflächige Abbildungen (insbesondere Pläne und Landkarten), der durch Faltung auf ein kleineres Format reduziert werden kann, indem er entlang von im gleichen Abstand von allen vier Rändern befindlichen Falzlinien nach innen gefaltet wird, so daß sich im Vergleich mit dem Ausgangsformat ein proportional verkleinertes Format ergibt, dadurch gekennzeichnet, daß er neben den vier Falzlinien, die zu den Außenrändern parallel verlaufen (1,2), an den Ecken über vier weitere Falzlinien (3) verfügt, die sich folgendermaßen ergeben: die zusätzliche Falzlinie an jeder Ecke verläuft jeweils senkrecht zu der Diagonalen des Quadrats (A1, A5, G1 bzw. G5), dessen Fläche von den zu den Rändem parallel verlaufenden Falzlinien begrenzt wird (1, 2), wobei die zusätzliche Falzlinie durch den Schnittpunkt der beiden das betreffende Quadrat begrenzende Falzlinien verläuft (Schnittpunkt von 1 und 2).

2. Rechteckiger Faltbogen nach Anspruch 1, dadurch gekennzeichnet, daß an den Außenkanten des Bogens Zusatzflächen angebracht sind, die ein Zusammenfalten ohne Überstand ermöglichen (Fig. 6: Flächen A'1 bis G'1 und Flächen A'5 bis G'5).

3. Rechteckiger Faltbogen nach Anspruch 1 oder 2, dadurch gekennzeichnet, daß Teilflächen des Bogens beschnitten sind.

4. Rechteckiger Faltbogen nach Anspruch 1,2 oder 3, dadurch gekennzeichnet, daß der Bogen durch einen Schnitt auf halbe Länge oder halbe Breite verkleinert ist.

## Claims

1. Rectangular foldable sheet for large area images (particularly drawings and maps),
which can be reduced to a smaller format by folding it to the inside along folding lines that are placed equally spaced from all four edges. As a result, and relative to the initial format, a proportionally smaller format will be produced that is characterized by
four additional folding lines on the edges (3), apart from the four folding lines which run parallel to the exterior edges (1,2), that result as follows:
each of the additional folding lines on each of the edges runs vertically to the diagonal of the square (A1, A5, G1, G5),
whose surface is limited (1,2) by the folding lines that run parallel to the edges,
and where the additional folding line runs through the point of intersection of the two folding lines that limit the square (point of intersecton of 1 and 2).

2. Rectangular foldable sheet according to claim 1, characterized by
additional areas at the exterior edges of the sheet,
that enable folding without overhang (Figure 6: areas A'1 to G'1 and areas A'5 to G'5).

3. Rectangular foldable sheet according to claims 1 or 2, characterized by
areas of the sheet according to claims 1 or 2 having been cut.

4. Rectangular foldable sheet according to claims 1, 2 or 3, characterized by
a cut that reduces the sheet to half of its length or half of its width.

## Revendications

1. Feuille pliable rectangulaire avec lignes de pliage diagonales pour dessins à grande surface (spécialement pour des plans et des cartes géographiques),
qui peut être réduite par pliage à un plus petit format,
en la pliant le long des lignes de pliage qui se trouvent en même distance des tous quatres bords de sorte qu'il se rend un format proportionellement diminué en comparaison avec le format original, qui est charactérisée par la propriété,
qu' elle a, à part des quatres lignes de pliage, qui sont tracées parallèlement aux bords (1,2),
quatre lignes de pliage (3) de plus aux coins, qui s'ensuivent dans la manière suivante:
la ligne supplémentaire de pliage à tous les coins s'étend perpendiculairement à la diagonale du carré (A1, A5, G1, G5)
dont la surface est limiteé par les lignes de pliage s'étendantes parallèlement des bords (1, 2) de facon que la ligne supplémentaire de pliage traverse le point d'intersection des deux lignes de pliage limitantes le carré (point d'intersection de 1 et 2).

2. Feuille pliable rectangulaire selon titre 1, qui est charactérisée par la propriété,
qu' il y a des surfaces supplémentaires aux bords de la feuille,
qui rendent possible un pliage de la feuille sans surplombement (Fig. 6: surfaces de A'1 à G'1 et surfaces de A'5 à G'5)

3. Feuille pliable rectangulaire selon titre 1 ou 2, qui est charactérisée par la propriété,
que des surfaces partielles de la feuille selon titre 1 ou 2 sont coupés.

4. Feuille pliable rectangulaire selon titre 1, 2 ou 3, qui est charactérisée par la propriété,
que la feuille est diminuée par une coupe reduisante sa longeur ou sa largeur à moitié.
